# EUROPÄISCHE PATENTSCHRIFT

(11) **EP 4 659 333 B1**
(45) Veröffentlichungstag und Bekanntmachung des Hinweises auf die Patenterteilung: **28.10.2026**
(21) Anmeldenummer: 24701846.8
(22) Anmeldetag: 23.01.2024
(51) Int. Cl.: H02K 1/28, H02K 1/32, H02K 9/28, H02K 13/00

(54) **WELLENVORRICHTUNG FÜR EINE ELEKTRISCHE MASCHINE, ELEKTRISCHE MASCHINE UND KRAFTFAHRZEUG**
SHAFT DEVICE FOR AN ELECTRIC MACHINE, ELECTRIC MACHINE, AND MOTOR VEHICLE
DISPOSITIF D'ARBRE POUR UNE MACHINE ÉLECTRIQUE, MACHINE ÉLECTRIQUE ET VÉHICULE AUTOMOBILE

(30) Priorität: 31.01.2023 DE 102023102256
(43) Veröffentlichungstag der Anmeldung: 10.12.2025
(73) Patentinhaber: Bayerische Motoren Werke Aktiengesellschaft, 80809 München (DE)
(72) Erfinder: MEYER, Johannes, 85757 Karlsfeld (DE)
(86) Internationale Anmeldenummer: PCT/EP2024/051458
(87) Internationale Veröffentlichungsnummer: WO 2024/160582

(56) Entgegenhaltungen:
- WO-A2-2012/102791
- US-A1- 2021 036 582
- US-A1- 2022 376 587

## Beschreibung

Die Erfindung betrifft eine Wellenvorrichtung für eine elektrische Maschine, mit einem Schleifringelement, über welches Erregerstrom für Rotorwicklungen eines Rotors der elektrischen Maschine übertragbar ist, mit einer Rotorwelle, welche zur Koppelung mit dem Rotor ausgebildet ist, an welcher das Schleifringelement abgestützt ist und welche wenigstens eine Fluidkanalanordnung aufweist, über welche Fluid zur Kühlung eines, eine Aufnahmeöffnung aufweisenden Stützkörpers, in dessen Aufnahmeöffnung die Rotorwelle und das Schleifringelement eingeführt und/oder drehbar gelagert sind, in Richtung des Stützkörpers leitbar ist. Weitere Aspekte der Erfindung betreffen eine elektrische Maschine mit einer derartigen Wellenvorrichtung sowie ein Kraftfahrzeug.

Aus der EP 1 793 459 A1 ist eine Schleifringwelle für einen elektrischen Generator mit mindestens einem Schleifring zum Herstellen einer elektrischen Verbindung zwischen einer auf einer Rotorwelle des elektrischen Generators angeordneten elektromagnetischen Spule und mindestens einem Schleifkontakt bekannt. Die Schleifringwelle weist zumindest bereichsweise eine unbenetzbare Oberflächenstruktur auf.

Die Druckschriften WO 2012/102791 A2, US 2021/036582 A1 und US 2022/376587 A1 offenbaren jeweils elektrische Maschinen oder Rotorbaugruppen, die einen Rotor und eine Welle mit integrierten Kühlvorrichtungen und weiteren mechanischen Komponenten zur Unterstützung der Funktionalität umfassen.

Aufgabe der vorliegenden Erfindung ist es, eine Wellenvorrichtung der eingangs genannten Art bereitzustellen, welche eine verbesserte Fluidführung zur Kühlung ermöglicht. Weitere Aspekte der Erfindung betreffen eine elektrische Maschine mit einer derartigen Wellenvorrichtung sowie ein Kraftfahrzeug.

Diese Aufgabe wird durch eine Wellenvorrichtung mit den Merkmalen des Patentanspruchs 1, durch eine elektrische Maschine mit den Merkmalen des Patentanspruchs 9 sowie durch ein Kraftfahrzeug mit den Merkmalen des Patentanspruchs 10 gelöst. Vorteilhafte Ausgestaltungen mit zweckmäßigen Weiterbildungen der Erfindung sind in den Unteransprüchen angegeben.

Ein erster Aspekt der Erfindung betrifft eine Wellenvorrichtung für eine elektrische Maschine, mit einem Schleifringelement, über welches Erregerstrom für Rotorwicklungen eines Rotors der elektrischen Maschine übertragbar ist, mit einer Rotorwelle, welche zur Koppelung mit dem Rotor ausgebildet ist, an welcher das Schleifringelement abgestützt ist und welche wenigstens eine Fluidkanalanordnung aufweist, über welche Fluid zum Wärmeaustausch mit einem, eine Aufnahmeöffnung aufweisenden Stützkörper, in dessen Aufnahmeöffnung die Rotorwelle und das Schleifringelement eingeführt und/oder drehbar gelagert sind, in Richtung des Stützkörpers leitbar ist.

Gemäß der Erfindung ist vorgesehen, dass ein Dichtungsträger der Wellenvorrichtung zumindest bereichsweise in die Aufnahmeöffnung zwischen die Rotorwelle und eine Stützkörperwandung des Stützkörpers eingeführt ist, und zwischen der Rotorwelle und dem Stützkörper zumindest einen Dichtkörper hält, welcher eine Durchtrittsöffnungsanordnung zum Durchleiten des Fluids von der Fluidkanalanordnung hin zu der Stützkörperwandung aufweist. Dies ist von Vorteil, da der Dichtkörper damit einerseits die Funktion des Abdichtens gegenüber einem unerwünschten Austritt des Fluids aus der Aufnahmeöffnung übernimmt und andererseits die Funktion des gezielten Führens des Fluids hin zu der Stützkörperwandung, wodurch beispielsweise ein Wärmeaustausch zwischen dem Fluid und dem Stützkörper ermöglicht ist. Der Dichtkörper kann beispielsweise den Austritt des Fluids in Axialerstreckungsrichtung der Wellenvorrichtung behindern und über die Durchtrittsöffnungsanordnung den Durchtritt des Fluids in Radialerstreckungsrichtung der Wellenvorrichtung freigeben, wodurch eine gezielte Beaufschlagung des Stützkörpers mit dem Fluid sichergestellt werden kann.

Das Fluid kann vorzugsweise als Öl ausgebildet sein, wodurch sowohl eine Schmierung als auch eine wirksame Temperierung, insbesondere Kühlung, der elektrischen Maschine, ermöglicht ist. Der Stützkörper kann vorzugsweise zumindest bereichsweise ringförmig, und dementsprechend zumindest bereichsweise als Stützring ausgebildet sein, wodurch eine gleichmäßig umfangsseitige Abstützung ermöglicht ist. Der Stützkörper kann allgemein zur Kühlung des Fluids, also beispielsweise als Kühlkörper dienen. Denkbar ist grundsätzlich jedoch auch, dass der Stützkörper, beispielsweise bei einem Kaltstart der elektrischen Maschine, auch zur Heizung, also als Heizkörper, dienen kann, um beispielsweise eine schnelle Erwärmung des Fluids, beispielsweise bei kalten Umgebungstemperaturen zu bewirken. Das Fluid kann also insgesamt über die Fluidkanalanordnung, durch die Durchtrittsöffnungsanordnung hindurch und hin zu der Stützkörperwandung geführt werden, um einen Wärmetausch zwischen Fluid und Stützkörper zu bewirken.

Die Stützkörperwandung des Stützkörpers kann vorzugsweise als hohlzylinderförmiger Wandbereich des Stützkörpers ausgebildet sein und die Aufnahmeöffnung umgeben.

Der Dichtungsträger kann den Dichtkörper vorzugsweise in Radialerstreckungsrichtung der Wellenvorrichtung zwischen der Rotorwelle und dem Stützkörper halten, sodass eine gleichmäßige, innenumfangsseitige Benetzung des Stützkörpers mit dem Fluid beim Betrieb der elektrischen Maschine, insbesondere bei rotierender Rotorwelle, ermöglicht ist. Dies gestattet eine besonders wirksame Wärmeübertragung zwischen dem Fluid und dem Stützkörper.

Der Erfindung liegt die Erkenntnis zugrunde, dass Rotorwellen elektrischer Maschinen, insbesondere stromerregter Synchronmaschinen, häufig zweiteilig ausgebildet sind, um stromführende Leiter unterhalb jeweiliger Lager sowie unterhalb radialer Abdichtungen hindurchzuführen. Die zweiteilige Ausgestaltung von Rotorwellen führt jedoch zu einer geringen Steifigkeit im Vergleich zu einteiligen Rotorwellen. Darüber hinaus kann es bedingt durch eine entsprechende Fügestelle zu einem verschlechterten Rundlauf an jeweiligen Lagersitzen der Rotorwellenteile kommen, was wiederum zu unerwünschten, erhöhten Lagerkräften sowie akustischen Auffälligkeiten führen kann.

Bei einer einteiligen Ausgestaltung der Rotorwelle können stromführende Leiter beispielsweise entlang zweier Längsnuten an der Rotorwelle hin zu jeweiligen Wicklungen geführt und mit diesen Wicklungen verbunden werden. Sofern bei der Herstellung einer derartigen Wellenvorrichtung und/oder elektrischen Maschine ein Verguss mit Harz, insbesondere Epoxidharz, beispielsweise durch Vakuum-Verguss erfolgt, ist eine Abdichtung im Bereich dieser Längsnuten mit erhöhtem Aufwand verbunden, wobei häufig eine manuelle Nachbearbeitung erforderlich sein kann, um Harz aus fluidführenden Öffnungen zu entfernen.

Die Erfindung setzt hier an und ermöglicht grundsätzlich eine einteilige Ausgestaltung der Rotorwelle bei gleichzeitig hinreichendem Wärmeaustausch zwischen dem Fluid und dem Stützkörper, wobei eine aufwändige Nachbearbeitung vermieden werden kann. Die Aufnahmeöffnung, in welcher Rotorwelle und Stützkörper eingeführt sind, kann dabei vorzugsweise als Nabe einerseits für die Rotorwelle und andererseits auch für das Schleifringelement ausgestaltet sein.

In einer vorteilhaften Weiterbildung der Erfindung ist der Dichtkörper als die Rotorwelle umfangsseitig umschließendes Bandelement ausgebildet. Dies ist von Vorteil, da durch die Ausgestaltung als Bandelement wenigstens eine Durchtrittsöffnung der Durchtrittsöffnungsanordnung besonders groß ausgestaltet sein kann, wodurch große Mengen des Fluids durch diese Durchtrittsöffnung hindurchgeführt werden können. Unter dem Ausdruck Bandelement kann ein Dichtring mit beispielsweise im Wesentlichen rechteckigem Querschnitt verstanden werden. Ein solcher, als Bandelelement ausgestalteter Dichtring kann beispielsweise Dichtlippen aufweisen, aufgrund welcher eine geringfügige geometrische Abweichung von einer reinen Querschnittsform vorliegen kann, um nur ein Beispiel zu nennen. Dennoch kann in einem solchen Fall, also beispielsweise trotz derartiger Dichtlippen, ein zumindest im Wesentlichen rechteckiger Querschnitt vorliegen.

In einer weiteren vorteilhaften Weiterbildung der Erfindung weist die Durchtrittsöffnungsanordnung Durchtrittsöffnungen auf, über welche das Fluid von der Fluidkanalanordnung hin zu der Stützkörperwandung leitbar ist. In vorteilhafter Weise kann die Durchtrittsöffnungsanordnung also mehrere, beispielsweise sechs, Durchtrittsöffnungen aufweisen, wodurch eine besonders große Menge des Fluids an den Stützkörper transportiert werden kann. Eine besonders gleichmäßige Verteilung des Fluids kann erzielt werden, wenn die Durchtrittsöffnungen gleichmäßig in Umfangsrichtung des Dichtkörpers, der Rotorwelle und/oder der Wellenvorrichtung verteilt ist.

In einer weiteren vorteilhaften Weiterbildung der Erfindung ist wenigstens eine der Durchtrittsöffnungen als Langloch ausgebildet. Von Vorteil ist hierbei, dass die Ausgestaltung als Langloch eine größere Flexibilität bei der Dimensionierung des Dichtkörpers ermöglicht. Vorzugsweise kann eine Haupterstreckungsrichtung des Langlochs in Umfangsrichtung oder zumindest im Wesentlichen in Umfangsrichtung des Dichtkörpers und/oder der Rotorwelle und/oder der Wellenvorrichtung orientiert sein. Unter dem Ausdruck "im Wesentlichen in Umfangsrichtung" orientiert kann in diesem Zusammenhang verstanden werden, dass die Haupterstreckungsrichtung überwiegend in Umfangsrichtung orientiert, sein kann, und damit entsprechend weniger zur Axialerstreckungsrichtung des Dichtkörpers und/oder der Rotorwelle und/oder der Wellenvorrichtung hin orientiert ist.

In einer weiteren vorteilhaften Weiterbildung der Erfindung ist wenigstens eine der Durchtrittsöffnungen mittels wenigstens einer Dichtlippe umgrenzt. Dies führt zu einer verbesserten Abdichtung und behindert einen unerwünschten Austritt des Fluids.

In einer weiteren vorteilhaften Weiterbildung der Erfindung ist der Dichtkörper über die wenigstens eine Dichtlippe an der Rotorwelle und/oder an dem Stützkörper abgestützt. Hierdurch ergibt sich eine besonders vorteilhafte Abdichtung unmittelbar an der Rotorwelle und/oder an dem Stützkörper. Vorteilhafterweise kann der Dichtkörper also zwei Dichtlippen aufweisen, wobei eine erste Dichtlippe (untere bzw. innere Dichtlippe) der zwei Dichtlippen an der Rotorwelle anliegen kann und eine zweite Dichtlippe (obere, bzw. äußere Dichtlippe) der zwei Dichtlippen an dem Stützkörper anliegen kann.

In einer weiteren vorteilhaften Weiterbildung der Erfindung umfasst die Fluidkanalanordnung wenigstens einen in Radialerstreckungsrichtung der Rotorwelle orientierten Radial-Fluidkanal, welcher einen Radial-Fluidkanal-Querschnitt aufweist, der in Richtung einer Radial-Fluidkanal-Mittelachse zumindest bereichsweise, insbesondere bei rotierender Rotorwelle bei bestimmungsgemäßem Gebrauch der elektrischen Maschine, mit einer der Durchtrittsöffnungen überlappt. Dies ist von Vorteil, da hierdurch auch bei Rotation der Rotorwelle eine kontinuierliche Beaufschlagung des Stützkörpers mit dem Fluid sichergestellt werden kann.

In einer weiteren vorteilhaften Weiterbildung der Erfindung ist zumindest ein Dichtringelement zwischen dem Schleifringelement und der Stützkörperwandung angeordnet. Dies ermöglicht in vorteilhafter Weise eine Abdichtung eines Spaltes zwischen dem Schleifringelement und der Stützkörperwandung. Das Dichtringelement kann beispielsweise als Radialdichtring ausgebildet sein.

Ein zweiter Aspekt der Erfindung betrifft eine elektrische Maschine mit einer Wellenvorrichtung gemäß dem ersten Aspekt der Erfindung. Diese elektrische Maschine kann vorzugsweise als stromerregte Synchronmaschine, kurz SSM, ausgebildet sein, wobei eine verbesserte Fluidführung und Kühlung ermöglicht ist.

Ein dritter Aspekt der Erfindung betrifft ein Kraftfahrzeug mit einer Wellenvorrichtung gemäß dem ersten Aspekt der Erfindung und/oder mit einer elektrischen Maschine gemäß dem zweiten Aspekt der Erfindung. Bei diesem Kraftfahrzeug ist eine verbesserte Kühlung und Fluidführung realisiert.

Die in Bezug auf einen der Aspekte vorgestellten, bevorzugten Ausführungsformen und deren Vorteile gelten entsprechend für die jeweils anderen Aspekte der Erfindung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: eine schematische Schnittdarstellung eines Teilbereichs einer Wellenvorrichtung, welche einer stark abstrahiert dargestellten, elektrischen Maschine zugeordnet ist, wobei die elektrische Maschine als Antriebsmaschine eines ebenfalls stark abstrahiert dargestellten Kraftfahrzeugs ausgebildet ist; und
- Fig. 2: eine perspektivische Schnittdarstellung des in Fig. 1 gezeigten Teilbereichs der Wellenvorrichtung.

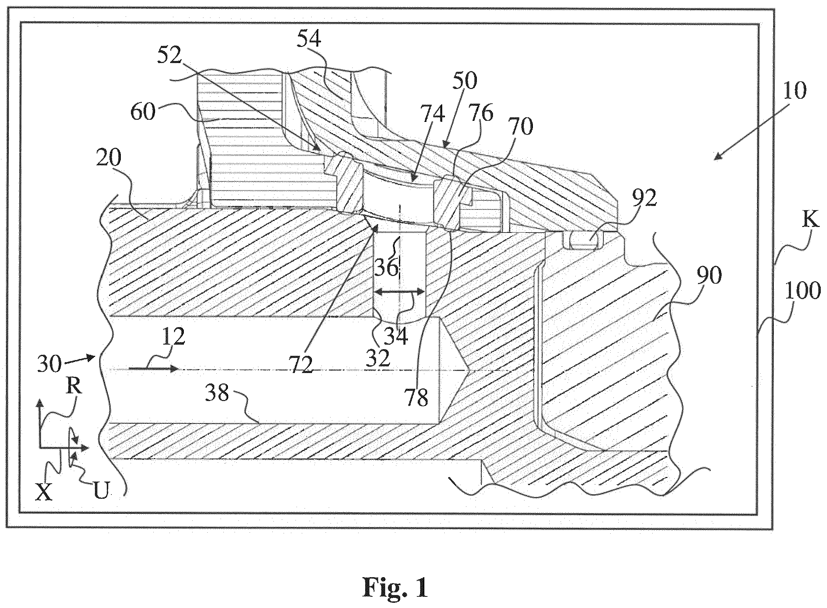

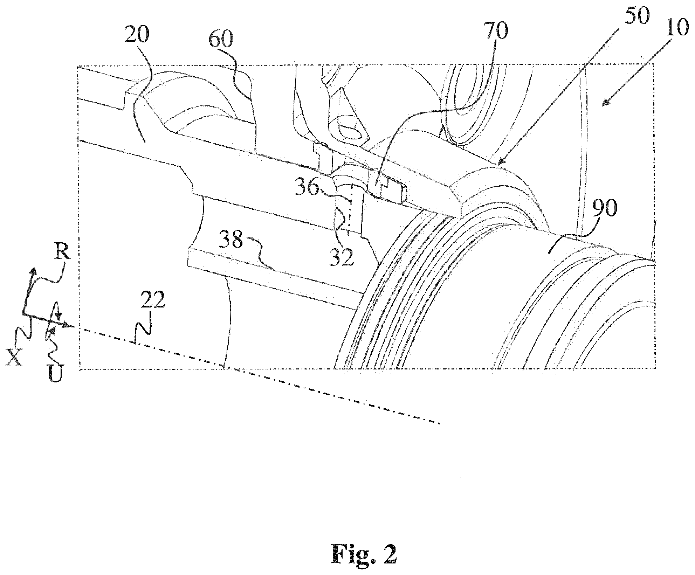

Fig. 1 zeigt in abstrahierter Darstellung ein Kraftfahrzeug K, das eine elektrische Maschine 100 aufweist, die als Antriebsmotor des Kraftfahrzeugs K dient. Die elektrische Maschine 100, welche beispielhaft als stromerregte Synchronmaschine, kurz SSM, ausgebildet ist, umfasst eine Wellenvorrichtung 10, welche in Fig. 1 teilweise und in schematischer Schnittdarstellung und in Fig. 2 teilweise und in perspektivischer Schnittdarstellung gezeigt ist.

Die Wellenvorrichtung 10 weist ein Schleifringelement 90 auf, welches auch als Schleifringmodul bezeichnet werden kann. Über das Schleifringelement 90 kann Erregerstrom für Rotorwicklungen für einen vorliegend nicht gezeigten Rotor der elektrischen Maschine 100 übertragen werden. Die Wellenvorrichtung 10 umfasst zudem eine mit dem Rotor gekoppelte, lediglich teilweise gezeigte Rotorwelle 20, an welcher das Schleifringelement 90 abgestützt ist und welche eine Fluidkanalanordnung 30 aufweist. Die Rotorwelle weist eine Mittelachse auf, entlang welcher eine lediglich in Fig. 2 gezeigte Rotationsachse 22 verläuft. Die Rotationsachse 22 erstreckt parallel zu einer Axialerstreckungsrichtung X der Wellenvorrichtung 10.

Über die Fluidkanalanordnung 30 kann Fluid 12, vorliegend in Form von Öl, zum Wärmeaustausch, nämlich zum Kühlen des Fluids 12, mit einem, eine Aufnahmeöffnung 52 aufweisenden Stützkörper 50 in Kontakt gebracht werden. Das Fluid 12 kann über die Fluidkanalanordnung 30 hin zu dem Stützkörper 50 geleitet werden, in dessen Aufnahmeöffnung 52 die Rotorwelle 20 und das Schleifringelement 90 eingeführt und drehbar gelagert sind. Der Stützkörper 50 kann, wie in Fig. 2 erkennbar ist, zumindest bereichsweise oder vollständig als Stützring ausgebildet sein.

Ein Dichtungsträger 60 der Wellenvorrichtung 10 ist bereichsweise in die Aufnahmeöffnung 52 zwischen die Rotorwelle 20 und eine Stützkörperwandung 54 des Stützkörpers 50 eingeführt. In Radialerstreckungsrichtung R der Wellenvorrichtung 10 zwischen der Rotorwelle 20 und dem Stützkörper 50 ist mittels des Dichtungsträgers 60 ein Dichtkörper 70 gehalten, welcher eine Durchtrittsöffnungsanordnung 72 zum Durchleiten des Fluids 12 von der Fluidkanalanordnung 30 hin zu der Stützkörperwandung 54 aufweist. Eine Umfangsrichtung U der Rotorwelle 20 sowie des Dichtkörpers 70 ist in Fig. 1 durch einen gekrümmten Doppelpfeil verdeutlicht, der sich senkrecht zur Axialerstreckungsrichtung X und um diese herum erstreckt.

Der Dichtkörper 70 ist als die Rotorwelle 20 umfangsseitig umschließendes Bandelement ausgebildet und die Durchtrittsöffnungsanordnung 72 weist mehrere Durchtrittsöffnungen 74 auf, über welche das Fluid 12 von der Fluidkanalanordnung 30 hin zu der Stützkörperwandung 54 geleitet werden kann. In den Fig. 1 und Fig. 2 ist lediglich eine einzige der Durchtrittsöffnungen 74 erkennbar, der Dichtkörper 70, bzw. dessen Durchtrittsöffnungsanordnung 72 weist jedoch exemplarisch sechs gleichmäßig über den Umfang des Dichtkörpers 70 verteilte Durchtrittsöffnungen 74 auf, von welchen jede als Langloch ausgebildet ist. Die Ausgestaltung mit sechs Durchtrittsöffnungen 74 hat sich als besonders geeignet erwiesen, um eine hohe Kühlwirkung zu erzielen, gleichzeitig aber dem Dichtring 70 eine gute Dauerhaltbarkeit zu verleihen.

Vorliegend ist jede der Durchtrittsöffnungen 74 mittels jeweils zweier Dichtlippen, nämlich einer in Radialerstreckungsrichtung R äußeren (oberen) Dichtlippe 76 und einer im Vergleich dazu in Radialerstreckungsrichtung R inneren (unteren) Dichtlippe 78 umgrenzt. Die äußere Dichtlippe 76 liegt dabei unter Ausbildung eines ersten Dichtsitzes an der Stützkörperwandung 54 an, wohingegen die innere Dichtlippe 78 an der Rotorwelle 20 anliegt.

Der Dichtkörper 70 ist also über die jeweiligen Dichtlippen 76, 78 einerseits an der Rotorwelle 20 und andererseits an dem Stützkörper 50 abgestützt, also in dichtender Anlage.

Vorliegend ist der Dichtkörper 70 durch dessen Abstützung auf der Rotorwelle 20 konusförmig verformt.

Die Fluidkanalanordnung 30 umfasst einen in Axialerstreckungsrichtung X orientierten Axial-Fluidkanal 38, der mit wenigstens einem in Radialerstreckungsrichtung R der Rotorwelle 20 orientierten Radial-Fluidkanal 32 verbunden ist. Vorliegend können bevorzugt sechs Radial-Fluidkanäle 32 vorgesehen sein. Zudem können vorzugsweise sechs Axial-Fluidkanäle 38 vorgesehen sein, wobei jeweils einer der Axial-Fluidkanäle 38 mit jeweils einem der Radial-Fluidkanäle 32 verbunden sein kann. Das Fluid 12 kann also beim Betrieb der elektrischen Maschine 100 zunächst durch den Axial-Fluidkanal 38 und anschließend in den Radial-Fluidkanal 32 strömen. Bei um die Rotationsachse 22 rotierender Rotorwelle 20 kann mit Unterstützung der Fliehkraft eine Förderung des Fluids 12 durch den Radial-Fluidkanal 32 und damit in Radialerstreckungsrichtung R zu der Stützkörperwandung 54 erfolgen. Bei Benetzung der Stützkörperwandung 54 mit dem Fluid 12 kann das Fluid 12 gekühlt werden. Der Radial-Fluidkanal 32 weist einen Radial-Fluidkanal-Querschnitt 34 auf, der in Richtung einer Radial-Fluidkanal-Mittelachse 36 wenigstens bereichsweise und zumindest bei rotierender Rotorwelle 20 intermittierend mit einer der Durchtrittsöffnungen 74 überlappt.

Um ein unerwünschtes Austreten des Fluids 12 in Axialerstreckungsrichtung X entlang dem Schleifringelement 90 zu unterbinden, ist ein als Radialdichtring ausgestaltetes Dichtringelement 92 zwischen dem Schleifringelement 90 und der Stützkörperwandung 54 angeordnet.

Bei der vorliegenden Variante der Wellenvorrichtung 10 ist der Stützring (Stützkörper 50) zusammenfassend mit der als Nabe dienenden Aufnahmeöffnung 52 versehen, die mit einem O-Ring als das Dichtringelement 92 auf dem Schleifringmodul (Schleifringelement 90) umlaufend abgedichtet ist. Zur Abdichtung der sechs radialen Ölbohrungen (Radial-Fluidkanäle 32) wird der Dichtkörper 70 als Formdichtelement eingesetzt, welches zwischen der Rotorwelle 20 und der Nabe des Stützrings sechsmal ein Langloch (Durchtrittsöffnungsanordnung 72 mit insgesamt sechs gleichmäßig in Umfangsrichtung U verteilten Durchtrittsöffnungen 74) mit den jeweiligen Dichtlippen 76, 78 bereitstellt. Damit wird die Verbindung zwischen Ölbohrung der Rotorwelle 20 und einer Doppelbohrung des Stützrings realisiert. Durch die Langlöcher sind die Anforderung an die Winkelgenauigkeit der Fertigung / Montage des Stützrings und der Rotorwelle 20 reduziert. Ein Verpressen der Dichtlippen 76, 78 kann durch ausbilden eines Konus auf der Rotorwelle 20 erreicht werden, wenn das Dichtelement (Dichtkörper 70) axial (parallel zur Axialerstreckungsrichtung X) an die richtige Position geschoben ist, wie in Fig. 1 gezeigt.

### Bezugszeichenliste

- 10: Wellenvorrichtung
- 12: Fluid
- 20: Rotorwelle
- 22: Rotationsachse
- 30: Fluidkanalanordnung
- 32: Radial-Fluidkanal
- 34: Radial-Fluidkanal-Querschnitt
- 36: Radial-Fluidkanal-Mittelachse
- 38: Axial-Fluidkanal
- 50: Stützkörper
- 52: Aufnahmeöffnung
- 54: Stützkörperwandung
- 60: Dichtungsträger
- 70: Dichtkörper
- 72: Durchtrittsöffnungsanordnung
- 74: Durchtrittsöffnung
- 76: obere Dichtlippe (radial äußere Dichtlippe)
- 78: untere Dichtlippe (radial innere Dichtlippe)
- 90: Schleifringelement
- 92: Dichtringelement
- 100: elektrische Maschine
- K: Kraftfahrzeug
- R: Radialerstreckungsrichtung
- U: Umfangsrichtung
- X: Axialerstreckungsrichtung

## Patentansprüche

1. Wellenvorrichtung (10) für eine elektrische Maschine (100), mit einer Rotorwelle (20), welche zur Koppelung mit dem Rotor ausgebildet ist und welche wenigstens eine Fluidkanalanordnung (30) aufweist, über welche Fluid (12) zum Wärmeaustausch mit einem, eine Aufnahmeöffnung (52) aufweisenden Stützkörper (50), in dessen Aufnahmeöffnung (52) die Rotorwelle (20) eingeführt ist, in Richtung des Stützkörpers (50) leitbar ist, wobei
ein Dichtungsträger (60) der Wellenvorrichtung (10) zumindest bereichsweise in die Aufnahmeöffnung (52) zwischen die Rotorwelle (20) und eine Stützkörperwandung (54) des Stützkörpers (50) eingeführt ist, und zwischen der Rotorwelle (20) und dem Stützkörper (50) zumindest einen Dichtkörper (70) hält, welcher eine Durchtrittsöffnungsanordnung (72) zum Durchleiten des Fluids (12) von der Fluidkanalanordnung (30) hin zu der Stützkörperwandung (54) aufweist,
**dadurch gekennzeichnet, dass**
die Wellenvorrichtung ein Schleifringelement (90) welches auf der Rotorwelle abgestützt und in die Aufnahmeöffnung des Stützkörpers (50) eingeführt ist, aufweist, über welches Erregerstrom für Rotorwicklungen des Rotors der elektrischen Maschine (100) übertragbar ist.

2. Wellenvorrichtung (10) nach Anspruch 1,
**dadurch gekennzeichnet, dass**
der Dichtkörper (70) als die Rotorwelle (20) umfangsseitig umschließendes Bandelement ausgebildet ist.

3. Wellenvorrichtung (10) nach Anspruch 1 oder 2,
**dadurch gekennzeichnet, dass**
die Durchtrittsöffnungsanordnung (72) Durchtrittsöffnungen (74) aufweist, über welche das Fluid (12) von der Fluidkanalanordnung (30) hin zu der Stützkörperwandung (54) leitbar ist.

4. Wellenvorrichtung (10) nach Anspruch 3,
**dadurch gekennzeichnet, dass**
wenigstens eine der Durchtrittsöffnungen (74) als Langloch ausgebildet ist.

5. Wellenvorrichtung (10) nach einem der Ansprüche 3 oder 4,
**dadurch gekennzeichnet, dass**
wenigstens eine der Durchtrittsöffnungen (74) mittels wenigstens einer Dichtlippe (76, 78) umgrenzt ist.

6. Wellenvorrichtung (10) nach Anspruch 5,
**dadurch gekennzeichnet, dass**
der Dichtkörper (70) über die wenigstens eine Dichtlippe (76, 78) an der Rotorwelle (20) und/oder an dem Stützkörper (50) abgestützt ist.

7. Wellenvorrichtung (10) nach einem der Ansprüche 3 bis 6,
**dadurch gekennzeichnet, dass**
die Fluidkanalanordnung (30) wenigstens einen in Radialerstreckungsrichtung (R) der Rotorwelle (20) orientierten Radial-Fluidkanal (32) umfasst, welcher einen Radial-Fluidkanal-Querschnitt (34) aufweist, der in Richtung einer Radial-Fluidkanal-Mittelachse (36) zumindest bereichsweise mit einer der Durchtrittsöffnungen (74) überlappt.

8. Wellenvorrichtung (10) nach einem der vorhergehenden Ansprüche,
**dadurch gekennzeichnet, dass**
zumindest ein Dichtringelement (92) zwischen dem Schleifringelement (90) und der Stützkörperwandung (54) angeordnet ist.

9. Elektrische Maschine (100) mit einer Wellenvorrichtung (10) nach einem der Ansprüche 1 bis 8.

10. Kraftfahrzeug (K) mit zumindest einer Wellenvorrichtung (10) nach einem der Ansprüche 1 bis 8 und/oder mit wenigstens einer elektrischen Maschine (100) nach Anspruch 9.

## Claims

1. Shaft device (10) for an electrical machine (100), comprising a rotor shaft (20) which is designed for coupling with the rotor and which has at least one fluid channel arrangement (30), via which fluid (12) can be conducted for heat exchange with a support body (50) having a receiving opening (52), into the receiving opening (52) of which the rotor shaft (20) is inserted, in the direction of the support body (50), wherein
a sealing carrier (60) of the shaft device (10) is inserted at least in regions into the receiving opening (52) between the rotor shaft (20) and a support body wall (54) of the support body (50), and holds at least one sealing body (70) between the rotor shaft (20) and the support body (50), which has a through-opening arrangement (72) for conducting the fluid (12) through from the fluid channel arrangement (30) to the support body wall (54),
**characterized in that**
the shaft device has a slip ring element (90) which is supported on the rotor shaft and inserted into the receiving opening of the support body (50), via which excitation current for rotor windings of the rotor of the electrical machine (100) can be transmitted.

2. Shaft device (10) according to claim 1,
**characterized in that**
the sealing body (70) is designed as a band element circumferentially enclosing the rotor shaft (20).

3. Shaft device (10) according to claim 1 or 2,
**characterized in that**
the through-opening arrangement (72) has through-openings (74), via which the fluid (12) can be conducted from the fluid channel arrangement (30) to the support body wall (54).

4. Shaft device (10) according to claim 3,
**characterized in that**
at least one of the through-openings (74) is designed as an elongated hole.

5. Shaft device (10) according to one of claims 3 or 4,
**characterized in that**
at least one of the through-openings (74) is delimited by means of at least one sealing lip (76, 78).

6. Shaft device (10) according to claim 5,
**characterized in that**
the sealing body (70) is supported on the rotor shaft (20) and/or on the support body (50) via the at least one sealing lip (76, 78).

7. Shaft device (10) according to one of claims 3 to 6,
**characterized in that**
the fluid channel arrangement (30) comprises at least one radial fluid channel (32) oriented in the radial extension direction (R) of the rotor shaft (20), which has a radial fluid channel cross-section (34) that overlaps at least in regions with one of the through-openings (74) in the direction of a radial fluid channel center axis (36).

8. Shaft device (10) according to one of the preceding claims,
**characterized in that**
at least one sealing ring element (92) is arranged between the slip ring element (90) and the support body wall (54).

9. Electrical machine (100) with a shaft device (10) according to one of claims 1 to 8.

10. Motor vehicle (K) with at least one shaft device (10) according to one of claims 1 to 8 and/or with at least one electrical machine (100) according to claim 9.

## Revendications

1. Dispositif d'arbre (10) pour une machine électrique (100), comprenant un arbre de rotor (20) qui est conçu pour être couplé au rotor et qui présente au moins un agencement de canal de fluide (30), par lequel un fluide (12) peut être conduit pour un échange thermique avec un corps de support (50) présentant une ouverture de réception (52), dans l'ouverture de réception (52) duquel l'arbre de rotor (20) est introduit, en direction du corps de support (50), dans lequel
un support d'étanchéité (60) du dispositif d'arbre (10) est introduit au moins par endroits dans l'ouverture de réception (52) entre l'arbre de rotor (20) et une paroi de corps de support (54) du corps de support (50), et maintient entre l'arbre de rotor (20) et le corps de support (50) au moins un corps d'étanchéité (70), lequel présente un agencement d'ouverture de passage (72) pour le passage du fluide (12) de l'agencement de canal de fluide (30) vers la paroi de corps de support (54),
**caractérisé en ce que**
le dispositif d'arbre présente un élément de bague collectrice (90), lequel est supporté sur l'arbre de rotor et introduit dans l'ouverture de réception du corps de support (50), par lequel un courant d'excitation pour des bobinages de rotor du rotor de la machine électrique (100) peut être transmis.

2. Dispositif d'arbre (10) selon la revendication 1,
**caractérisé en ce que**
le corps d'étanchéité (70) est réalisé sous forme d'élément de bande entourant l'arbre de rotor (20) sur sa périphérie.

3. Dispositif d'arbre (10) selon la revendication 1 ou 2,
**caractérisé en ce que**
l'agencement d'ouverture de passage (72) présente des ouvertures de passage (74), par lesquelles le fluide (12) peut être conduit de l'agencement de canal de fluide (30) vers la paroi de corps de support (54).

4. Dispositif d'arbre (10) selon la revendication 3,
**caractérisé en ce que**
au moins l'une des ouvertures de passage (74) est réalisée sous forme de trou oblong.

5. Dispositif d'arbre (10) selon l'une des revendications 3 ou 4,
**caractérisé en ce que**
au moins l'une des ouvertures de passage (74) est délimitée au moyen d'au moins une lèvre d'étanchéité (76, 78).

6. Dispositif d'arbre (10) selon la revendication 5,
**caractérisé en ce que**
le corps d'étanchéité (70) est supporté sur l'arbre de rotor (20) et/ou sur le corps de support (50) par le biais de l'au moins une lèvre d'étanchéité (76, 78).

7. Dispositif d'arbre (10) selon l'une des revendications 3 à 6,
**caractérisé en ce que**
l'agencement de canal de fluide (30) comprend au moins un canal de fluide radial (32) orienté dans la direction d'extension radiale (R) de l'arbre de rotor (20), lequel présente une section transversale de canal de fluide radial (34) qui chevauche au moins par endroits l'une des ouvertures de passage (74) en direction d'un axe médian de canal de fluide radial (36).

8. Dispositif d'arbre (10) selon l'une des revendications précédentes,
**caractérisé en ce que**
au moins un élément de bague d'étanchéité (92) est disposé entre l'élément de bague collectrice (90) et la paroi de corps de support (54).

9. Machine électrique (100) avec un dispositif d'arbre (10) selon l'une des revendications 1 à 8.

10. Véhicule automobile (K) avec au moins un dispositif d'arbre (10) selon l'une des revendications 1 à 8 et/ou avec au moins une machine électrique (100) selon la revendication 9.
